(19) **Europäisches Patentamt**

**European Patent Office**

**Office européen des brevets**

(11) **EP 1 020 276 A1**

(12) **EUROPEAN PATENT APPLICATION**
published in accordance with Art. 158(3) EPC

(43) Date of publication:
**19.07.2000 Bulletin 2000/29**

(51) Int. Cl.⁷: **B29C 45/00**, B01D 71/02
// B29L31:14

(21) Application number: **98944250.4**

(22) Date of filing: **28.09.1998**

(86) International application number:
**PCT/JP98/04320**

(87) International publication number:
**WO 99/16603 (08.04.1999 Gazette 1999/14)**

(84) Designated Contracting States:
**DE FR GB**

(30) Priority: **30.09.1997 JP 26582797**

(71) Applicant: **NGK INSULATORS, LTD.**
**Nagoya-City, Aichi Prefecture 467-8530 (JP)**

(72) Inventors:
 • **SUZUKI, Tomio**
  **Mie-prefecture 512-8027 (JP)**

 • **OTAGIRI, Tadashi**
  **Aichi-prefecture 457-0037 (JP)**

(74) Representative:
 **Leson, Thomas Johannes Alois, Dipl.-Ing.**
 **Patentanwälte**
 **Tiedtke-Bühling-Kinne & Partner,**
 **Bavariaring 4**
 **80336 München (DE)**

(54) **POROUS MEMBRANE COMPRISING CERAMIC AND CONTAINING PLASTIC AS BINDER**

(57)    A porous membrane in which ceramic aggregate particles ceramic are bonded with a plastic bonding material. An aspect ratio of the aggregate particles is controlled to be 2.0 or less, and a content of aggregate particles in the porous membrane is controlled to be 60 - 99 volume %. It can easily produce at a low cost, and therefore, productivity can be improved. It has strength and corrosion resistance, which are characteristics of ceramics. Control of diameter of fine pores, which is important as a separator membrane or a filtration membrane, can be precisely conducted.

**Fig.1**

## Description

Technical Field

The present invention relates to a porous membrane of a ceramic in which a plastic is used as a bonding material.

Background Art

A ceramic porous membrane having a number of fine continuous pores has higher reliability because of its excellent physical strength and durability, and less deterioration even if it is subjected to washing by acid, alkali or the like, because of high corrosion resistance in comparison with a polymer porous membrane such as high molecular membrane. Further, it is relatively easy to control a diameter of a fine continuous pore which decides a filterability of a membrane. A ceramic porous membrane has such advantages, and therefore, is useful as a separator membrane or a filtration membrane to be used for separating or filtering solid liquid, liquid, or gas.
In such a ceramic porous membrane, technical points are a method for forming the membrane and performance of the membrane, which determine a filterability of the membrane.
Generally, a ceramic porous membrane can be obtained by forming ceramic particles to give a compact, and then firing the compact at about 500 - 1000°C to mutually sinter the ceramic particles.

[Problems to be Solved by the Invention]

The aforementioned method can give a porous membrane having excellent strength and corrosion resistance since ceramic particles firmly connect with one another by sintering. However, a porous membrane having a practical strength cannot be formed unless the compact is fired at such a high temperature of generally 500 - 1000°C.
Such firing has problems of increasing a production cost because it requires a great amount of energy, low dimensional precision due to firing shrinkage brings about irregular diameters of fine continuous pores, and it requires another machining after firing so as to have a predetermined shape.
The present invention has been made in view of problems in firing a ceramic as mentioned above and aims to provide a porous ceramic which can be easily produced without firing at a low cost.

Disclosure of Invention

According to the present invention, there is provided a porous membrane comprising:

ceramic aggregate particles, and
a plastic bonding material bonding said ceramic aggregated particles;
wherein the ceramic aggregated particles each has an aspect ratio of 2.0 or less, and a content of the ceramic aggregate particles in the porous membrane is 60 - 99 volume %.

In the ceramic porous membrane, fine continuous pore may be formed by contraction of the plastic according to a temperature transition. The ceramic porous membrane is preferably formed by injection molding.

Brief Description of Drawings

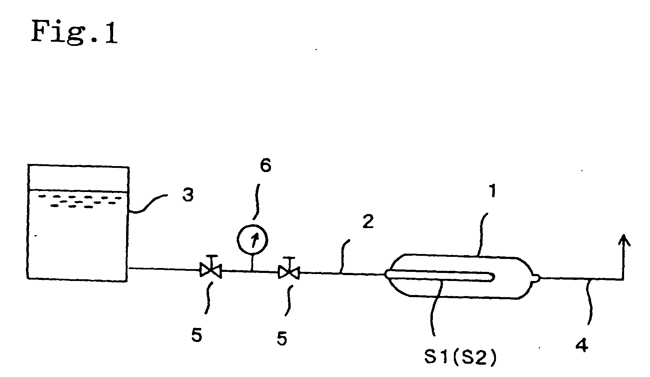

Fig. 1 is a schematic view showing an apparatus measuring a volume of permeant water through a porous membrane of the present invention.

Best Mode for Carrying Out the Invention

First, a porous membrane of the present invention is described in detail.
A ceramic porous membrane generally means a material in which numerous fine continuous pores are formed among ceramic particles. The ceramic porous membrane can be suitably used for filtration or separation such as solidliquid separation, liquid separation, gas separation, or the like.
A porous membrane of the present invention is characterized in having a structure in which ceramic aggregate particles are connected with one another by means of a plastic bonding material unlike a conventional structure in which ceramic particles are connected with one another by sintering.

The porous membrane can be easily produced at a relatively low temperature and at a low cost since it is not sintered. Besides, molding with higher precision is possible because it does not have firing shrinkage.

That is, it can be tried to improve productivity because more precise control of a diameter of a fine continuous pore is possible unlike sintering, and machining after firing is not required.

Aggregate particles in the present invention means ceramic particles forming skeleton of the porous membrane.

A material for aggregate particles is not particularly limited as long as it is ceramic, and there can be used, for example, silica glass, alumina, zirconia, mullite, titania, magnesia, or a mixture thereof.

It is necessary in the present invention to control an aspect ratio, i.e., a ratio of the longer diameter to the shorter diameter of an aggregate particle to be 2.0 or less.

A shape of a particle is made close to a sphere by controlling the aspect ratio to be 2.0 or less, which enables to ensure flowability of the particles upon molding.

In addition, the aggregate particles can be dispersed in a condition near the closest packing, fine continuous pores with high precision can be maintained even if some contraction is caused after molding.

In the present invention, a bonding material is a plastic material for mutually connecting aggregate particles forming skeleton of the porous membrane.

Since a bonding material is made of plastic, high temperature is not required during molding the porous membrane. Besides, flowability of the plastic improves flowability of the material of the membrane during molding.

A plastic to be used as a bonding material is not particularly limited as long as strength after molding can be secured. For example, the following thermoplastic resins and thermosetting resins can be suitably used for the bonding material.

Incidentally, more than one resins may be used in combination as long as all the resins are selected from either a group of thermoplastic resins or a group of thermosetting resins.

As a thermoplastic resin, there can be used a resin such as polypropylene, hard vinyl chloride, high density polyethylene, or poly(ethylene terephthalate). Among them, polyacrylate, polystyrene, ABS resin, polyacetal, nylon 6, nylon 66, poly(ethylene tetrafluoride), and polycarbonate are preferable; and poly(vinylidene fluoride), polyetherimide, reinforced poly(ethylene terephthalate), poly(phenylene sulfide), poly amideimide, poly(etheretherketone), and polyimide are more preferable.

Examples of thermosetting resins are phenol resin, epoxy resin, unsaturated polyester resin, urea resin, melamine resin, and urethane resin.

In the present invention, such a plastic is preferably connected with ceramic particles by a silane coupling treatment.

By subjecting the plastic to a silane coupling treatment, the organic plastic is more firmly connected with the inorganic ceramic having low compatibility by means of silanol coupling. This suppresses exfoliation at a boundary of the materials, thereby further improving strength of the porous membrane.

Fine continuous pores of a porous membrane of the present invention can be formed by using gaps among aggregate particles as they are or by using a difference in coefficient of thermal expansion between the aggregate particles and the bonding material.

In a method using gaps among aggregate particles as they are (hereinafter referred to as A method), it is preferable to use a powder having (a) a narrow particle size distribution of the aggregate particles, specifically, a powder in which a ratio of a particle diameter of the largest particle to that of the smallest particle in 90% of particles in the powder is 2 or less and (b) a content of aggregate particles of 80 volume % or more.

Under such conditions, the gaps among aggregate particles cannot be filled up with the bonding material since an amount of the bonding material is relatively small. That is, it is possible to use the gaps remaining among aggregate particles as fine continuous pores in the porous membrane.

In a method using a difference in coefficient of thermal expansion between the aggregate particles and the bonding material (hereinafter referred to as B method), a powder which particles have a specified particle diameter is used as in A method. The powder is molded under conditions that no gap is generated among the aggregate particles upon molding.

Specifically, it is preferable that the powder has a content of the aggregate particles of 60 -80 volume %, which is rather low.

Under such conditions, aggregate particles are in contact with one another from the molding to the end of cooling. Therefore, the molded body does not contract due to the aggregate particle, and the shape of the molded body can be maintained.

On the other hand, gaps among aggregate particles are filled with the bonding material during molding since an amount of the bonding material is relatively large. However, the bonding material having high coefficient of thermal expansion greatly contracts in comparison with the aggregate particles having low coefficient of thermal expansion, and gaps are generated inside the molded body.

In B method, thus obtained gaps are used as continuous pores in the porous membrane.

Incidentally, aggregate particles, i.e., ceramic particles generally have coefficient of the thermal expansion of about $0.5 - 10 \times 10^{-6}k^{-1}$, a bonding material, i.e., plastic generally has coefficient of the thermal expansion of about $10 - 200 \times 10^{-6}k^{-1}$.

Control of an average diameter of the fine continuous pores (hereinafter referred to as diameter of fine continuous pores) which determines separation/filtration function of the porous membrane depends on the aforementioned methods of forming fine continuous pores.

When the fine continuous pores are formed in A method, a desired diameter of fine continuous pores can be obtained by suitably selecting a particle diameter of aggregated particles mainly.

For example, when aggregated particles having a particle diameter of 10 - 20 μm, there can be obtained a porous membrane having an average diameter of fine continuous pores of about 1 - 5 μm.

When the fine continuous pores are formed in B method, a diameter of fine continuous pores can be adjusted by a particle diameter of aggregate particles, a type of the plastic bonding material, a method of cooling, or the like. When aggregate particles having an average particle diameter of about 10 m, there can be obtained a porous membrane having a diameter of fine continuous pores of about 0.002 - 0.02 m.

In the present invention, it is also possible to form a porous membrane having different diameters of continuous pores by combining A method and B method.

For example, in the case of a liquid filtration membrane, it is possible to produce a substrate portion having relatively large diameter of continuous pores in A method and a liquid filtration membrane portion having relatively small diameter of continuous pores in B method.

In this case, it is preferable to first produce a substrate by injection molding using, as a bonding material, a theremoplastic resin having high melting temperature or a thermosetting resin, and then coat a liquid filtration membrane around the substrate with, as a bonding material, a thermoplastic resin having low melting temperature or a thermosetting resin.

It is necessary in the present invention that the porous membrane has a content of aggregate particles of 60 - 99 volume %.

By controlling a content of aggregate particles to be 60 volume % or more, ceramic characteristics of strength and corrosion resistant can be effectively imparted to the porous membrane, and fine continuous pores having high precision can be formed because contraction upon molding is reduced.

Incidentally, a content is determined by a ratio of volume of aggregate particles to that of a bonding material, and volume of continuous pores is excluded.

On the other hand, when the ratio of aggregate particles is less than 60 volume %, advantages of high strength, high corrosion resistance, and the like, of ceramic are sometimes attenuated though flowability of the material to be molded during molding is improved; and forming of fine continuous pores is made difficult.

The reason why the content of aggregate particles is controlled to be 99 volume % or less is that a content of a bonding material is decreased when the content of aggregate particles exceeds 99 volume %, which causes difficulty in mutually connecting aggregate particles in a porous membrane.

A porous membrane of the present invention is molded in a various kinds of molding methods according to a method of molding plastic. However, it is preferable to form the porous membrane in an injection molding.

A porous membrane formed by injection molding is characterized in that fine continuous pores each has a precise diameter unlike a porous membrane formed by sintering.

Further, a porous membrane of the present invention does not need postmachining such as adjusting a size and has only to be subjected to a little finishing for removing burrs, or the like. Therefore, a porous membrane of the present invention has an advantage of greatly simplified machining step, and it is possible to mold an article having a complex shape with a high precision.

As described above, in a porous membrane of the present invention, since a diameter of a fine continuous pore can be controlled by a particle diameter of aggregate particles, fine continuous pores having an average diameter ranging from about 10 Å to 10 μm can be formed. Therefore, a porous membrane of the present invention can be suitably used as a filtration membrane or a separation membrane for solidliquid separation, liquid separation, gas separation, or the like.

It is also possible to form a separation membrane or a filtration membrane by forming a porous membrane having finer thoughholes on a substrate of a ceramic porous membrane of the present invention.

Finally, a method for producing a porous membrane of the present invention is described.

The method has three steps of 1) preparing aggregate particles, 2) preparing a bonding material, and 3) kneading and molding a mixture of them.

(Preparing aggregate particles)

First, a kind of ceramic is selected in consideration of strength, corrosion resistance, or the like, required for an aggregate, and aggregate particles are prepared so as to have a desired average particle diameter and a desired distribution of particle sizes.

As aggregate particles, a ceramic powder on the market may be used. However, it is necessary to select the powder having an average particle diameter which can give a desired fine continuous pore.

It is preferable to use a powder having a narrow distribution of particle sizes in order to obtain a certain diameter of fine continuous pores. Specifically, it is necessary to use a powder in which a ratio of particle diameter of the largest particle to the smallest particle in 90% of particles in the powder is 2 or less. It is also possible to use a powder on the market after adjusting a distribution of sizes.

It is preferable that aggregate particles prepared in the aforementioned manner is subjected to a pretreatment for silane coupling.

As a pretreatment, there can be employed a spray method, or the like. A silane coupling agent may be added when the aggregate particles are mixed with the bonding material by employing.

(Preparation of particles for a bonding material)

First, a kind of plastic is selected in consideration of strength, or the like, required as a bonding material to prepare particles for a bonding material having a desired average particle diameter and size distribution.

(Kneading and molding aggregated particles and particles for a bonding material)

First, aggregate particles are mixed with particles for a bonding material to disperse the aggregate particles in the bonding material.

From the mixing and dispersing to the molding, temperature is preferably kept so that the plastic for the bonding material maintains a moderate flowability. For example, by setting a temperature a little higher than a melt temperature of the plastic, dispersibility and flowability improve, thereby improving workability.

A kneader, a triroll mill, etc., can be suitably used for the aforementioned keading and dispersing treatment.

After kneading, the mixture is formed into a pellet, and the pellet is molded to obtain a molded article.

A molding method can be performed according to a known plasticmolding method such as an extrusion molding or injection molding. However, injection molding is preferable in view of productivity, reducing production cost, etc.

Since a porous membrane of the present invention can be produced by a molding method according to that for plastic, a molded article has characteristics of not only high dimensional precision and but also high strength and corrosion resistance like a ceramic article.

Incidentally, when thermoplastic resin is used as plastic in a porous membrane of the present invention, ceramic can be collected by a meltseparation of ceramic from plastic at about 400°C and used again.

[Example]

The present invention is described in more detail with reference to the Examples. However, the present invention is by no means limited to these Examples.

(Example 1)

A porous membrane having a content of aggregate particles of 95 volume % was produced by the use of poly(ethylene telephtalate) which is a thermoplastic resin as a bonding material and silica glass as aggregate particles.

As aggregate particle, a commercial spherical silica glass particles having the average particle diameter of 10 μm and an aspect ratio of about 1 were subjected to a silane coupling treatment by a pretreatment method with a spray.

Then, after the aggregate particles were subjected to the aforementioned treatment at 300°C, they were mixed with and dispersed in a fused bonding material to have a kneaded mixture. The kneaded mixture was pelletized.

The obtained pellets were fused at 290°C and subjected to injection molding so as to give a porous membrane having a bottomed cylindrical shape having the outside diameter of 10 mm, thickness of the membrane of 1 mm, and a length of 15 mm.

Tables 1 and 2 show measured values of average diameters of pores, volumes of permeant water, and the like.

Incidentally, the average diameters of pores, and the volumes of permeant water were measured in the following manner.

(Measurement of average diameter of pore)

An average diameter of pores in the porous membrane was measured by a method of mercury penetration.

(Measurement of permeant water)

There were prepared a sample S1 having a bottomed shape having the outside diameter of 10 mm, thickness of the membrane of 1 mm, and a length of 15 mm, or a sample S2 having the same shape as the sample S1 except that the sample S2 has a liquidfiltration membrane. It was subjected to the measurement shown in Fig. 1, and the volume of permeant water was measured.

In the measurement, the sample is installed in a sealed container 1, and a connection tube 2 is airtightly connected to an open end of the sample S1 or S2.

Tap water is passed through a filter of activated carbon and an ion exchanger. Further, deionized water which passed though ultrafilter having a graduated molecular weight of #2000 permeates through the sample S1 or S2 from a pressure tank 3, and flow out of the sealed container 1 though a discharge tube 4.

A pressure for supplying water, i.e., a difference in pressure between inside and outside of the sample was controlled to be 0.2 - 0.5 Kg/cm$^2$ in the case of the sample S1 and 1 - 3 Kg/cm$^2$ in the case of the sample S2. Rate Q $(1/m^2 \cdot hr \cdot (Kg/cm^2))$ of water permeation of the deionized water was calculated by the following equation (1).

$$Q=V/(A \cdot \Delta P) \tag{1}$$

(V: volume of permeation of deionized water (1/hr), A: filtration area (m$^2$) of each sample, P: difference in pressure (Kg/cm$^2$) between inside and outside the sample)

Incidentally, the samples S1 and S2 were left in a water for one night before measurement and then subjected to deairing under the condition that the samples were immersed in the water.

(Example 2)

There were used poly amideimide as a bonding material and silica glass as a aggregate particles. The mixture was subjected to injection molding at 350°C so as to obtain a substrate.

Then, silica glass was mixed with methacrylic resin to obtain a mixture. The mixture was molten at about 260°C. The substrate was dipped into the molten mixture and immediately drawn up. Then, the substrate was cooled in a thermostatic vessel having a temperature of about -20°C to form a liquid filtration membrane having a thickness of 30 μm.

Table 1 and 2 show values obtained by measuring a diameter of a fine continuous pore, a volume of permeant water, and the like, of the obtained porous membrane.

(Comparative Example 1)

A porous membrane was obtained in the same manner as in Example 1 except that the content of aggregate particles was 50 volume %.

Values of a diameter of a fine continuous pore, a volume of permeant water, and the like, of the obtained porous membrane were shown in Tables 1 and 2.

(Comparative Example 2)

A porous membrane was obtained in the same manner as in Example 1 except for an aspect ratio of an aggregate particle was 2.2.

Values of a diameter of a fine continuous pore, or the like, and a volume of permeant water of the obtained porous membrane were shown in Tables 1 and 2.

Table 1

| | | Materials for porous membrane | | | | Content of aggregate particles in porous membrane (vol%) |
|---|---|---|---|---|---|---|
| | | Aggregate particle | | | Bonding material | |
| | | Kind | Particle diameter (μm) | Aspect ratio | Kind | |
| Example 1 | | SG | 10 | 1.05 | PET | 95 |
| Example 2 | Substrate | SG | 25 | 1.0 | PAI | 95 |
| | Filtration Membrane | SG | 10 | 1.0 | MR | 70 |
| Comp. Ex. 1 | | SG | 10 | 1.05 | PET | 50 |
| Comp. Ex. 2 | | SG | 10 | 2.2 | PET | 95 |

SG: Silica Glass,
PET: poly(ethylene terephthalate),
PAI: poly amide-imide,
MR: methacrylic resin

Table 2

| | | Evaluation of porous membrane | | |
|---|---|---|---|---|
| | | Average diameter of fine continuous pore (μm) | Volume of permeant water $(1/m^2 \cdot hr \cdot (Kg/cm^2))$ | Remarks |
| Example 1 | | 1.8 | 2500 | |
| Example 2 | Substrate | 3.5 | 10000 | |
| | Filtration membrane | 0.01 | 5 | |
| Comp. Ex. 1 | | Fine continuous pores could not be formed. | - | |
| Comp. Ex. 2 | | - | - | Molding was difficult. |

In Example 2, where the content of aggregate particles is within 60 - 90 volume%, a desired fine continuous pore can be formed, whereas in Comparative Example 1, where the content of aggregate particles is less than 60 volume %, a fine continuous pore cannot be formed.

Further, a porous membrane in Example 1 having an aspect ratio of 2.0 or less was excellent in moldability, whereas a porous membrane in Comparative Example 2 having an aspect ratio of more than 2.0 had difficulty in molding.

Further, as shown in Example 2, it is also possible to form, on a ceramic porous membrane of the present invention as a substrate, a porous membrane having fine continuous pores so as to form a separation membrane or a filtration membrane.

Industrial Applicability

Since, plastic is used as a bonding material in a porous membrane of the present invention, the porous membrane can be produced easily at a low cost by a molding method according to plastic. Therefore, it is possible to seek improvement of productivity.

Since the porous membrane contains 60 volume % or more of ceramic particles, it remarkably has characteristics of ceramic concerning strength and corrosion resistance and is possible to precisely control a diameter of pores, which is important for a separation membrane or a filtration membrane.

**Claims**

1. A porous membrane comprising:

   ceramic aggregate particles, and
   a plastic bonding material bonding said ceramic aggregated particles;
   wherein the ceramic aggregated particles each has an aspect ratio of 2.0 or less, and a content of the ceramic aggregate particles in the porous membrane is 60 - 99 volume %.

2. A porous membrane according to claim 1, wherein a fine continuous pore is formed by shrinking of the plastic according to a temperature decreasing.

3. A porous membrane according to claim 1 or 2, wherein the porous membrane is formed by injection molding.

Fig.1

# INTERNATIONAL SEARCH REPORT

International application No.

PCT/JP98/04320

**A. CLASSIFICATION OF SUBJECT MATTER**
Int.Cl⁶ B29C45/00, B01D71/02, B29L31:14

According to International Patent Classification (IPC) or to both national classification and IPC

**B. FIELDS SEARCHED**

Minimum documentation searched (classification system followed by classification symbols)
Int.Cl⁶ B29C45/00-45/84, B01D71/02, C04B38/00-38/10, C08J9/232, C08J9/24

Documentation searched other than minimum documentation to the extent that such documents are included in the fields searched
Jitsuyo Shinan Koho       1926-1998
Kokai Jitsuyo Shinan Koho   1971-1995

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP, 52-70988, A (Asahi Chemical Industry Co., Ltd.), 13 June, 1977 (13. 06. 77) (Family: none) | 1-3 |
| X | JP, 63-66242, A (Hitachi Chemical Co., Ltd.), 24 March, 1988 (24. 03. 88) (Family: none) | 1 |
| X | JP, 8-241737, A (Matsushita Electric Industrial Co., Ltd.), 17 September, 1996 (17. 09. 96) (Family: none) | 1 |
| X | JP, 51-75, B (Sumitomo Electric Industries, Ltd.), 5 January, 1976 (05. 01. 76) (Family: none) | 1 |

☐ Further documents are listed in the continuation of Box C.   ☐ See patent family annex.

\* Special categories of cited documents:
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 15 December, 1998 (15. 12. 98) | 22 December, 1998 (22. 12. 98) |

| Name and mailing address of the ISA/ | Authorized officer |
|---|---|
| Japanese Patent Office | |
| Facsimile No. | Telephone No. |

Form PCT/ISA/210 (second sheet) (July 1992)